# EUROPÄISCHE PATENTSCHRIFT

(11) **EP 1 241 388 B1**
(45) Veröffentlichungstag und Bekanntmachung des Hinweises auf die Patenterteilung: **25.05.2005**
(21) Anmeldenummer: 02005086.0
(22) Anmeldetag: 07.03.2002
(51) Int. Cl.: F16K 41/10, F16J 3/04

(54) **Elastisch verformbarer Membranbalg sowie ein Verfahren zur Herstellung eines solchen elastisch verformbaren Membranbalgs**
Elastic deformable bellow and method of producing such a bellow
Soufflet élastique déformable et procédé pour sa production

(30) Priorität: 16.03.2001 AT 4152001
(43) Veröffentlichungstag der Anmeldung: 18.09.2002
(73) Patentinhaber: VAT Holding AG, 9469 Haag (CH)
(72) Erfinder: Tatzreiter, Wolfgang, 6850 Dornbirn (DE)
(74) Vertreter: Hefel, Herbert, Dipl.-Ing.

(56) Entgegenhaltungen:
- US-A- 3 918 622
- US-A- 3 953 037
- PATENT ABSTRACTS OF JAPAN vol. 006, no. 220 (M-169), 5. November 1982 (1982-11-05) & JP 57 124154 A (HITACHI SEISAKUSHO KK), 2. August 1982 (1982-08-02)
- PATENT ABSTRACTS OF JAPAN vol. 014, no. 481 (M-1037), 19. Oktober 1990 (1990-10-19) & JP 02 195001 A (NHK SPRING CO LTD), 1. August 1990 (1990-08-01)

## Beschreibung

Die Erfindung betrifft einen Elastisch verformbarer Membranbalg mit einer Mehrzahl von Ringmembranen, deren innere Ränder eine innere Öffnung des Membranbalgs begrenzen und die an ihren inneren Rändern und ihren äußeren Rändern wechselweise miteinander verschweißt sind, wobei an der Innenseite des Membranbalgs mindestens ein Gleitring zur Führung des Membranbalgs auf einer Stange festgelegt ist, sowie ein Verfahren zur Herstellung eines solchen elastisch verformbaren Membranbalgs.

Bekannt sind Wellbälge, bei denen Rohre balgartig verformt werden, um auf diese Weise ein Rohr zu erhalten, das im begrenzten Umfang verformbar ist. Solche Wellbälge werden beispielsweise zur Durchführung einer begrenzten Bewegung ins Vakuum verwendet.

Beim Anmeldungsgegenstand hingegen handelt es sich um einen elastisch verformbaren Membranbalg, der eine Hüllwand aus nachgiebigen, flexiblen Bestandteilen zur Abdichtung zwischen Teilen mit begrenzter gegenseitiger Beweglichkeit darstellt, beispielsweise zur Abdichtung einer Betätigungsspindel innerhalb eines Gehäuses eines Vakuumventiles. Solche Anwendungsformen für Membranbälge dieser Art zeigen beispielsweise die US 3,108,780 A; US 4,044,993 A; CH 531 666 und FR 1 408 365. Je nach Anwendungsfall herrscht zwischen dem Inneren und der Außenseite des Membranbalgs eine Druckdifferenz, wobei der Druck im Inneren des Membranbalgs kleiner oder größer sein kann als der außerhalb des Membranbalgs vorliegende Druck. Insbesonders wenn im Inneren des Membranbalgs ein höherer Druck vorherrscht als außerhalb des Membranbalgs, kann es aufgrund der geringen Seitensteifigkeit des Membranbalgs zu einem mehr oder weniger starken seitlichen Ausknicken des Membranbalgs kommen (ab einem bestimmten Längen- und Durchmesserverhältnis). Dieser Fall tritt beispielsweise auf, wenn eine Betätigungsstange, beispielsweise eine Ventilstange durch den Membranbalg ins Innere einer Vakuumkammer geführt wird. Durch das seitliche Ausknicken des Membranbalgs legt sich dessen Innenwandung stellenweise an die in den Membranbalg reichende Betätigungsstange an, wobei es bei einer Verschiebung der Betätigungsstange zu einer Reibung der inneren Rändern von einzelnen Ringmembranen des Membranbalges auf der Stange kommt. Dies führt zu einem mehr oder weniger starken Verschleiß der Schweißnähte zwischen den inneren Rändern der Ringmembrane, wodurch im Laufe der Zeit Beeinträchtigungen der Festigkeit dieser Schweißnähte und Lecks auftreten können.

Zur Minderung der Reibung wird daher die in den Membranbalg ragende Stange üblicherweise mit einer sehr glatten Oberfläche versehen. Da eine ausreichende Lebensdauer des Membranbalgs auf diese Weise aber dennoch nicht immer gewährleistet werden kann, wurde weiters bereits vorgeschlagen, an der Innenseite des Membranbalgs in Achsialrichtung des Membranbalgs voneinander beabstandete Ringe anzuschweißen, die über die inneren Ränder der Ringmembrane vorstehen und zur Führung auf der Stange dienen. Zur weiteren Verringerung der Reibung wurde weiters vorgeschlagen, innen auf diese Ringe jeweils einen inneren Teflonring aufzuklipsen, der zu diesem Zweck geschlitzt ausgebildet ist.

Da die Ringmembrane aus sehr dünnen Blechen bestehen, meist mit einer Dicke im Bereich zwischen 0,4 und 0,06 mm, ist die Herstellung einer Schweißnaht zum Anschweißen des Rings ohne eine Beschädigung der Ringmembrane mit einem relativ großen Aufwand verbunden. Weiters muß der Ring, um die Herstellung einer solchen Schweißnaht zu ermöglichen, aus einem sehr hochwertigen und damit teuren Material bestehen. Nachteilig ist weiters, daß sich die Verankerung der aufgeklipsten Teflonringe an den angeschweißten Ringen lösen kann, beispielsweise durch einen Stoß.

Aus der US-PS 4,650,160 ist ein Wellbalg bekannt, der aus mehreren Teilbälgen besteht. Diese Teilbälge sind miteinander verschweißt und im Anschlußbereich zwischen diesen Teilbälgen sind in besonderen Ausformungen des Anschlußbereiches Gleitringe eingesetzt. Bei diesen Wellbälgen erfolgt nur eine Änderung der Biegung, nicht der achsialen Ausdehnung. Die achsiale Ausdehnung ist bei Wellbälgen im Vergleich zu Membranbälgen ohnehin viel weniger veränderbar. Durch die im US-PS 4,650,160 zwischen jeweils zwei Teilwellenbälge eingesetzten Gleitringe würde die Möglichkeit des Zusammenschiebens des Wellenbalges zusätzlich verringert.

Aus der GB 2 062 132 A ist ein Wellenbalg bekannt, der gegenüber einer hohen Druckbelastung von außen in seiner Omega-Form der einzelnen Wellungen stabilisiert ist. Zu diesem Zweck sind in allen aufeinanderfolgenden Wellungen an die Form der Wellungen angepaßte Stützringe eingesetzt, die im zusammengeschobenen Zustand des Wellenbalges aneinander anliegen und zusammen ein geschlossenes Rohr um die zentrale Stange bilden. Solche hohen von außen einwirkenden Drücke treten insbesondere bei Hydraulikanwendungen auf. Das Zusammenschieben des Wellenbalgs wird durch die Stützringe somit begrenzt.

Ein kolbenstangenloser Zylinder, bei dem die Zylinderwand von einem gewellten Gummischlauch gebildet wird, ist aus der JP 63-199965 A bekannt. Zur Aufrechterhaltung der Wellungen des Gummischlauches sind an der Außenseite des Gummischlauches diesen einschnürende Ringe und im Inneren des Gummischlauches Stützringe vorgesehen, die auf einer Stange verschiebbar angeordnet sind. Die außen den Gummischlauch umgebenden Ringe zusammen mit den dazwischenliegenden im Inneren angeordneten Stützringen halten die Wellung des Gummischlauches aufrecht.

Aufgabe der Erfindung ist es, einen Membranbalg der eingangs genannten Art bereitzustellen, der trotz einer Anbringung von mindestens einem Gleitring sehr einfach herstellbar ist und in seiner möglichen Längenänderung möglichst wenig beeinträchtigt ist. Erfindungsgemäß gelingt dies durch einen Membranbalg mit den Merkmalen des Anspruchs 1 bzw. durch ein Verfahren zur Herstellung eines Membranbalgs mit den Merkmalen des Anspruchs 9.

Der Gleitring eines erfindungsgemäßen Membranbalgs ist im Inneren des Membranbalgs sicher festgelegt, wobei der Herstellungsaufwand eines erfindungsgemäßen Membranbalgs den eines herkömmlichen Membranbalgs ohne Gleitringe nur unwesentlich übersteigt. Auch die mögliche Längenänderung des Membranbalgs wird nur wenig beeinträchtigt.

Auch bei herkömmlichen Membranbälgen ohne Gleitringe wurden manchmal schon, besonders bei sehr langen herzustellenden Membranbälgen, zunächst mehrere Teilbälge hergestellt. Diese werden einzeln auf Dichtigkeit geprüft, so daß ein undichter Teilbalg sofort ausgeschieden werden kann. Anschließend werden die Teilbälge durch wenige Schweißnähte zum vollständigen Membranbalg verbunden. Die Gefahr eines Lecks in dem fertiggestellten, aus sehr vielen Ringmembranen und einer entsprechenden Anzahl von Schweißnähten aufgebauten Membranbalg wird dadurch verringert.

Günstigerweise weist die äußere Mantelfläche des Gleitrings einen Durchmesser auf, der geringfügig kleiner ist als die innere Öffnung der Ringmembrane. Beim Verschweißen der Teilbälge bei der Herstellung des Membranbalgs werden die Teilbälge dadurch mittels des eingelegten Gleitrings jeweils zentriert, so daß zur Zentrierung der Teilbälge keine weiteren Maßnahmen erforderlich sind. Der Arbeitsaufwand bei der Verschweißung der einzelnen Teilbälge kann dadurch gegenüber einem Membranbalg ohne Gleitringe sogar verringert werden.

Weitere Vorteile und Einzelheiten der Erfindung werden im folgenden anhand des in den Figuren dargestellten Ausführungsbeispiels der Erfindung erläutert. In der Zeichnung zeigen:
- Fig. 1: einen schematischen Längsmittelschnitt durch drei Teilbälge mit den dazwischen einzulegenden Gleitringen;
- Fig. 2: eine Seitenansicht eines Gleitringes;
- Fig. 3: einen vergrößerten Schnitt entlang der Linie A-A von Fig. 2;
- Fig. 4: eine schematische Darstellung des Schweißvorgangs beim Verschweißen von zwei Teilbälgen mit dazwischen eingelegtem Gleitring;
- Fig. 5: einen Längsmittelschnitt durch einen Membranbalg mit daran angebrachten Endstücken und einer in den Membranbalg ragenden Stange und
- Fig. 6: eine Seitenansicht eines etwas modifizierten Ausführungsbeispiels eines Gleitrings.

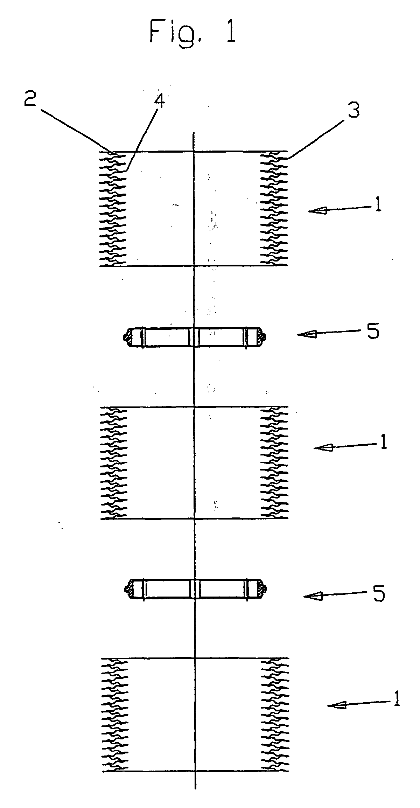

Die in Fig. 1 dargestellten Teilbälge 1 des Membranbalgs bestehen jeweils aus einer Mehrzahl von kegelartig geformten und gewellten Ringmembranen 2, wobei die jeweils äußeren Ränder 3 und die jeweils inneren Ränder 4 der aneinandergereihten Ringmembranen miteinander verschweißt sind. Zur Herstellung eines Teilbalgs 1 werden zunächst jeweils zwei aneinandergelegte Ringmembrane 2 an ihren Rändern 4 miteinander verschweißt. Die Paare von Ringmembranen werden anschließend aneinandergereiht und jeweils an ihren äußeren Rändern 3 miteinander verschweißt. Ein Teilbalg kann beispielsweise aus 20 bis 40 Ringmembranen 2 bestehen. Neben der in den Figuren dargestellten gewellten Form sind auch andere Formen solcher Ringmembranen denkbar und möglich (und von herkömmlichen Membranbälgen bekannt), beispielsweise im Querschnitt gesehen gestufte Ausbildungen der Ringmembrane.

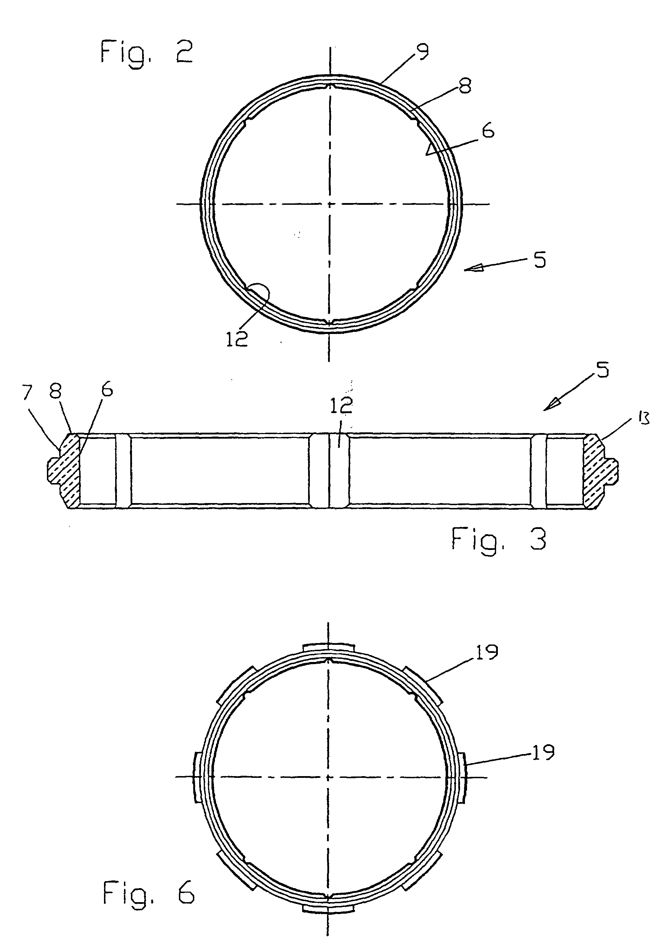

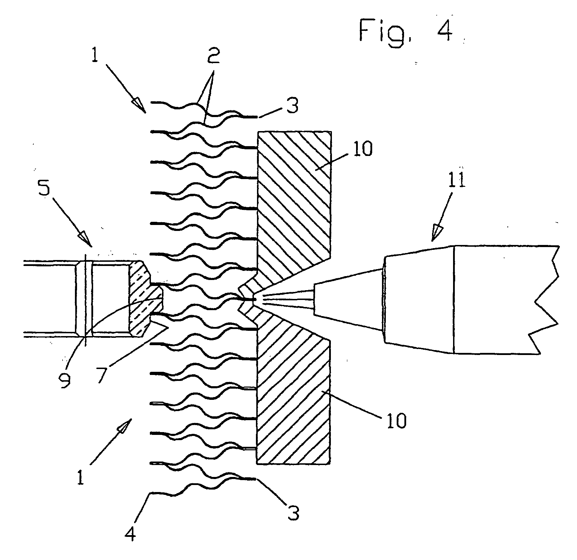

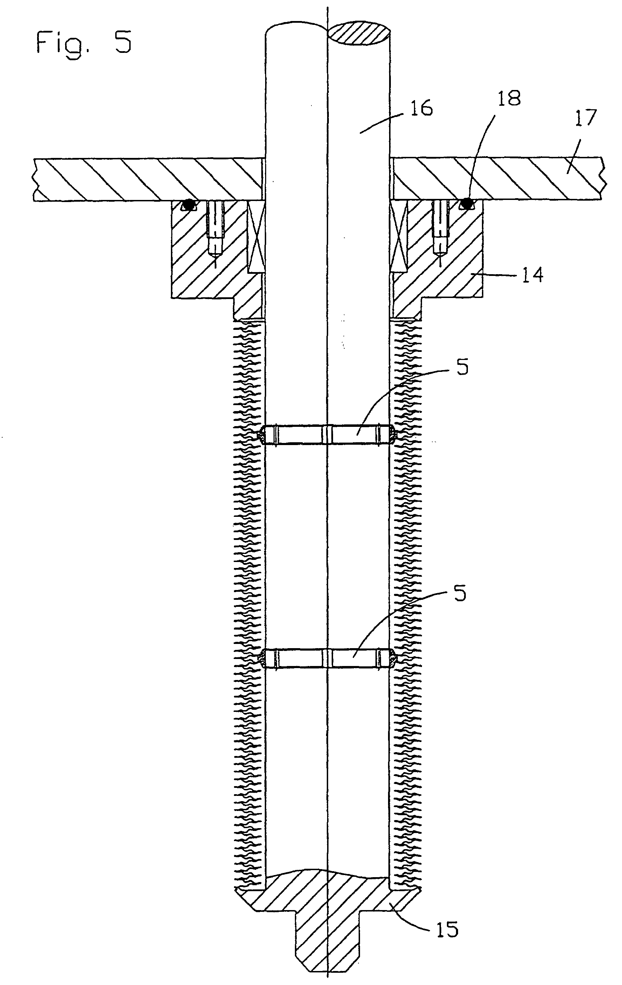

Beim Zusammenschweißen dieser Teilbälge 1 werden nun erfindungsgemäß Gleitringe 5 zwischen die Teilbälge eingelegt. Ein solcher Gleitring 5 besitzt, wie aus Fig. 2 und 3 ersichtlich ist, eine innere Mantelfläche 6 und eine äußere Mantelfläche 7, wobei die inneren und äußeren Mantelflächen 6, 7 über stirnseitige Seitenflächen 8 miteinander verbunden sind. An seiner äußeren Mantelfläche 7 weist der Gleitring einen radial nach außen vorstehenden ringförmigen Vorsprung 9 auf, der eine Art Flansch zu Verankerung des Gleitrings zwischen den beiden einander zugewandten randseitigen Lamellen 2 der beiden Teilbälge 1 bildet. Die inneren Ränder 4 der Ringmembrane 2, zwischen denen der Gleitring 5 angeordnet ist, liegen auf der äußeren Mantelfläche 7 des Gleitringes jeweils angrenzend an den Vorsprung 9. Im zusammengedrückten Zustand des Membranbalgs (der in den Zeichnungen nicht dargestellt ist) können auch die inneren Ränder 4 von benachbarten Ringmembranen 2 über der äußeren Mantelfläche 7 angeordnet sein.

Das Verschweißen der beiden einander zugewandten randseitigen Ringmembrane 2 der beiden Teilbälge an den äußeren Rändern 3 dieser beiden Ringmembrane ist in Fig. 4 schematisch dargestellt. Die äußere Mantelfläche 7 des Gleitrings 5 weist einen Durchmesser auf, der geringfügig kleiner ist als die innere Öffnung der Ringmembrane 2. Der zwischen die Teilbälge 1 eingelegte Gleitring stellt dadurch eine Führung zur gegenseitigen Zentrierung dieser beiden Teilbälge 1 beim Schweißen dar. Weitere Führungseinrichtungen zur Zentrierung beim Schweißen sind dadurch nicht erforderlich. Die beiden endseitigen Ringmembranen werden von metallischen Haltefingem 10 aneinandergedrückt und an ihrem äußeren Rand 3 mittels einer herkömmlichen Schweißeinrichtung 11 miteinander verschweißt. Der Gleitring 5 ist in der Folge mit geringem radialen sowie achsialen Spiel unverrückbar und formschlüssig zwischen den Ringmembranen 2 im Inneren der Membranbalgs festgelegt, wobei seine innere Mantelfläche einen kleineren Durchmesser hat als der innere Rand 4 der Ringmembrane 2, das heißt die innere Mantelfläche 6 des Gleitrings steht innen über die inneren Ränder 4 der Ringmembrane 2 vor.

Da die beiden Ringmembrane 2, zwischen denen ein jeweiliger Gleitring 5 sitzt, nicht vollständig zusammengedrückt werden können, verringert sich der insgesamte Hub des Membranbalgs geringfügig, was bei der Auslegung des Membranbalgs entsprechend berücksichtigt werden kann.

Je nach Länge des Membranbalgs sind in achsialer Richtung des Membranbalgs mehrere voneinander beabstandete Gleitringe 5 angeordnet. Das Maß für den Abstand zwischen zwei Gleitringen hängt von unterschiedlichen Faktoren ab, wie dem Durchmesser des Membranbalgs. Als Richtwert hat es sich in der Praxis bewährt, den Abstand der Gleitringe mit dem Ein- bis Dreifachen, vorzugsweise Eineinhalb- bis Zweifachen des Außendurchmessers des Membranbalgs anzusetzen, wobei dieser Wert für den Abstand für den entspannten Zustand des Balges gilt.

Der Gleitring 5 weist an seiner inneren Mantelfläche 6 mehrere Einbuchtungen 12 auf. Diese bilden Durchlaßöffnungen zum Durchtritt von Luft zwischen dem Gleitring 5 und einer Stange, auf welcher der Gleitring 5 geführt ist. An der äußeren Mantelfläche 7 des Gleitringes 5 sind zu den Seitenflächen 8 geneigte Facetten 13 vorgesehen, welche Einlaufschrägen für die Ringmembrane 2 beim Zusammendrücken des Membranbalgs bilden. Anstelle von eben ausgebildeten geneigten Facetten könnten diese auch mit einer gekrümmten Oberfläche als Abrundungen zu den Seitenflächen 8 ausgebildet sein.

In Fig. 5 ist ein Membranbalg mit angeschweißten Endstücken 14, 15 dargestellt, der eine Stange 16 aufnimmt, wobei das Endstück 15 einstückig mit der Stange 16 ausgebildet ist bzw. vom freien Ende dieser Stange gebildet wird. Zwischen dem Endstück 14 und einer Dichtfläche an der Wand 17 einer Vakuumkammer ist in einem Ventilsitz im Endstück 14 ein Dichtring 18, beispielsweise ein Viton-O-Ring vorgesehen. Im Inneren des Membranbalgs herrscht Atmosphärendruck, während in der Vakuumkammer ein Vakuum vorliegt. Der Membranbalg ist mittels Gleitringen 5 auf der Stange 16 geführt, wobei die Gleitringe 5 bei einer achsialen Verschiebung der Stange 16 auf der Stange 16 gleiten und eine Berührung zwischen den inneren Rändern 4 der Ringmembrane 2 und der Stange 16 verhindern.

Die Gleitringe bestehen bevorzugterweise aus einem Material mit einem geringen Reibungskoeffizienten gegenüber Metall, insbesondere Edelstahl, beispielsweise aus einem abriebfesten Kunststoff oder aus Metall. Geeignete Kunststoffe sind beispielsweise Teflon (= PTFE) und Ertalon. Für eine Ausbildung der Gleitringe 5 aus Metall kommt beispielsweise eine Bronzelegierung in Frage, welche gute Gleit- bzw. Notlaufeigenschaften aufweist.

Ein etwas modifiziertes Ausführungsbeispiel eines Gleitrings ist in Fig. 6 dargestellt. Der Gleitring weist hier anstelle eines ringförmigen Vorsprungs mehrere in Umfangsrichtung voneinander beabstandete Vorsprünge 19 auf.

Die Erfindung ist nicht auf die in den Figuren dargestellten speziellen Ausführungsbeispiele beschränkt. Unterschiedliche Modifikationen sind möglich, ohne den Bereich der Erfindung zu verlassen.

### Legende

### zu den Hinweisziffern:

- 1: Teilbalg
- 2: Ringmembran
- 3: äußerer Rand
- 4: innerer Rand
- 5: Gleitring
- 6: innere Mantelfläche
- 7: äußere Mantelfläche
- 8: Seitenflache
- 9: Vorsprung
- 10: Haltefinger
- 11: Schweißeinrichtung
- 12: Einbuchtung
- 13: Facette
- 14: Endstück
- 15: Endstück
- 16: Stange
- 17: Wand
- 18: Dichtring
- 19: Vorsprung

## Patentansprüche

1. Elastisch verformbarer Membranbalg mit einer Mehrzahl von Ringmembranen (2), deren innere Ränder (4) eine innere Öffnung des Membranbalgs begrenzen und die an ihren inneren Rändern (4) und ihren äußeren Rändern (3) wechselweise miteinander verschweißt sind, wobei an der Innenseite des Membranbalgs mindestens ein Gleitring zur Führung des Membranbalgs auf einer Stange festgelegt ist, **dadurch gekennzeichnet, daß** der Gleitring (5) an seiner äußeren Mantelfläche (7) einen radial nach außen vorstehenden ringförmigen Vorsprung (9) oder mehrere in Umfangsrichtung voneinander beabstandete Vorsprünge (19) aufweist, wobei der bzw. die Vorsprünge (9, 19) in den Raum zwischen zwei Ringmembrane (2) ragt bzw. ragen und den Gleitring formschlüssig gegen eine Verschiebung in achsialer Richtung des Membranbalgs festlegt bzw. festlegen und die inneren Ränder (4) der beiden Ringmembrane (2), zwischen denen der bzw. die Vorsprünge (9, 19) des Gleitrings (5) angeordnet ist bzw. sind, auf der äußeren Mantelfläche (7) des Gleitrings (5) aufliegen und im zusammengedrückten Zustand des Membranbalgs auch die inneren Ränder (4) von benachbarten Ringmembranen (2) über der äußeren Mantelfläche (7) des Gleitrings (5) angeordnet sind.

2. Membranbalg nach Anspruch 1, **dadurch gekennzeichnet, daß** der Gleitring (5) an seiner inneren Mantelfläche (6) mindestens eine Einbuchtung (12), vorzugsweise mindestens drei in Umfangsrichtung voneinander beabstandete Einbuchtungen (12) zur Ausbildung von Durchlaßöffnungen von Luft zwischen dem Gleitring (5) und der Stange (16) aufweist.

3. Membranbalg nach Anspruch 1 oder Anspruch 2, **dadurch gekennzeichnet, daß** an der äußeren Mantelfläche (7) des Gleitrings (5) zu den Seitenflächen (8) des Gleitrings geneigte Facetten (13) vorgesehen sind, welche Einlauf schrägen für innere Ränder (4) von Ringmembranen beim Zusammendrücken des Balges bilden.

4. Membranbalg nach einem der Ansprüche 1 bis 3, **dadurch gekennzeichnet, daß** die äußere Mantelfläche (7) des Gleitrings (5) einen Durchmesser aufweist, der geringfügig kleiner ist als die innere Öffnung der Ringmembrane (2), wobei die äußere Mantelfläche (7) eine Zentrierungsfläche für die Ringmembrane (2) bildet.

5. Membranbalg nach einem der Ansprüche 1 bis 4, **dadurch gekennzeichnet, daß** in achsialer Richtung des Membranbalgs mehrere voneinander beabstandete Gleitringe (5) angeordnet sind.

6. Membranbalg nach Anspruch 5, **dadurch gekennzeichnet, daß** der Abstand zwischen den Gleitringen (5) jeweils im Bereich zwischen dem Einfachen und dem Dreifachen, vorzugsweise im Bereich zwischen dem Eineinhalbfachen und dem Zweifachen des äußeren Durchmessers des Membranbalgs liegt.

7. Membranbalg nach einem der Ansprüche 1 bis 6, **dadurch gekennzeichnet, daß** der Gleitring aus Kunststoff besteht, vorzugsweise aus Teflon.

8. Membranbalg nach einem der Ansprüche 1 bis 6, **dadurch gekennzeichnet, daß** der Gleitring aus Metall besteht, vorzugsweise aus einer Bronzelegierung.

9. Verfahren zur Herstellung eines elastisch verformbaren Membranbalgs aus einer Mehrzahl von miteinander verschweißten Ringmembranen, wobei an der Innenseite des Membranbalgs mindestens ein Gleitring zur Führung des Membranbalgs auf einer Stange festgelegt wird, **dadurch gekennzeichnet, daß** zunächst zumindest zwei, vorzugsweise mehrere Teilbälge (1) aus miteinander verschweißten Ringmembranen (2) hergestellt werden, daß mindestens ein Gleitring (5) zwischen zwei Teilbälge (1) eingelegt wird, wobei ein jeweiliger Gleitring (5) an seiner äußeren Mantelfläche (7) einen radial nach außen vorstehenden ringförmigen Vorsprung (9) oder mehrere in Umfangsrichtung voneinander beabstandete Vorsprünge (19) aufweist und der bzw. die Vorsprünge (9, 19) in den Raum zwischen den beiden benachbarten randseitigen Ringmembranen (2) der Teilbälge (1) ragt bzw. ragen, und daß in der Folge jeweils die beiden benachbarten randseitigen Ringmembrane (2) dieser Teilbälge (1) an ihren äußeren Rändern (3) miteinander verschweißt werden, wobei der Gleitring (5) formschlüssig gegenüber einer Verschiebung in achsialer Richtung des Membranbalgs festgelegt ist.

10. Verfahren nach Anspruch 9, **dadurch gekennzeichnet, daß** jeweils zwischen zwei Teilbälge (1) ein Gleitring (5) eingelegt wird.

11. Verfahren nach Anspruch 9 oder Anspruch 10, **dadurch gekennzeichnet, daß** der bzw. die Vorsprünge (9, 19) in einem in Achsialrichtung gesehen mittleren Bereich des Gleitrings (5) angeordnet ist bzw. sind und zwei miteinander zu verschweißende Teilbälge (1) jeweils durch die an den Vorsprung bzw. an die Vorsprünge beidseitig anschließende äußere Mantelfläche (7) des Gleitrings (5) zueinander zentriert werden.

## Claims

1. A resiliently deformable bellows with a plurality of annular diaphragms (2), the internal edges (4) of which bound an internal opening in the bellows and which are welded to one another alternately on their internal edges (4) and on their external edges (3), wherein at least one sliding ring for guiding the bellows on a rod is fixed to the inside of the bellows, **characterized in that** the external generated face (7) of the sliding ring (5) has an annular projection (9) projecting radially outwards or a plurality of projections (19) at a distance from one another in the peripheral direction, wherein the projection or projections (9, 19) projects or project into the space between two annular diaphragms (2) and prevents or prevent the sliding ring with positive locking from being displaced in the axial direction of the bellows, and the internal edges (4) of the two annular diaphragms (2), between which the projection or projections (9, 19) of the sliding ring (5) is or are arranged, rest on the external generated face (7) of the sliding ring (5), and in the compressed state of the bellows the internal edges (4) of adjacent annular diaphragms (2) are also arranged above the external generated face (7) of the sliding ring (5).

2. A bellows according to Claim 1, **characterized in that** the internal generated face (6) of the sliding ring (5) has at least one indentation (12), preferably at least three indentations (12) arranged at a distance from one another in the peripheral direction in order to form through-openings for air between the sliding ring (5) and the rod (16).

3. A bellows according to Claim 1 or Claim 2, **characterized in that** bevels (13), which are inclined towards the lateral faces (8) of the sliding ring and which form run-in slopes for internal edges (4) of annular diaphragms (2) when the bellows is compressed, are provided on the external generated face (7) of the sliding ring (5).

4. A bellows according to one of Claims 1 to 3, **characterized in that the** external generated face (7) of the sliding ring (5) has a diameter which is slightly smaller than the internal opening of the annular diaphragms (2), wherein the external generated face (7) forms a centring face for the annular diaphragms (2).

5. A bellows according to one of Claims 1 to 4, **characterized in that** a plurality of sliding rings (5) at a distance from one another are arranged in the axial direction of the bellows.

6. A bellows according to Claim 5, **characterized in that** the distance between the sliding rings (5) is in the range of between the 1-fold and the 3-fold, preferably in the range of between the 1 ½-fold and the 2-fold, of the external diameter of the bellows in each case.

7. A bellows according to one of Claims 1 to 6, **characterized in that** the sliding ring consists of plastics material, preferably of Teflon.

8. A bellows according to one of Claims 1 to 6, **characterized in that** the sliding ring consists of metal, preferably of a bronze alloy.

9. A method of producing a resiliently deformable bellows from a plurality of annular diaphragms welded to one another, wherein at least one sliding ring for guiding the bellows on a rod is fixed to the inside of the bellows, **characterized in that** at first at least two, and preferably a plurality of, partial bellows (1) are produced from annular diaphragms (2) welded to one another, at least one sliding ring (5) is inserted between two partial bellows (1), wherein the external generated face (7) of one respective sliding ring (5) has an annular projection (9) projecting radially outwards or a plurality of projections (19) at a distance from one another in the peripheral direction and the projection or projections (9, 19) projects or project into the space between the two adjacent annular diaphragms (2) on the edge of the partial bellows (1), and after that the two respective adjacent annular diaphragms (2) on the edge of the said partial bellows (1) are welded to one another at their outer edges (3), wherein the sliding ring (5) is prevented with positive locking from being displaced in the axial direction of the bellows.

10. A method according to Claim 9, **characterized in that** a sliding ring (5) is inserted in each case between two partial bellows (1).

11. A method according to Claim 9 or Claim 10, **characterized in that** the projection or projections (9, 19) is or are arranged in a central region of the sliding ring (5) as viewed in the axial direction, and two partial bellows (1) to be welded to each other are centred with respect to each other in each case by the external generated face (7) of the sliding ring (5) adjoining the projection or projections on both sides.

## Revendications

1. Soufflet à membranes déformable élastiquement comprenant une pluralité de membranes annulaires (2) dont les bords intérieurs (4) limitent une ouverture intérieure du soufflet à membranes, et les bords intérieurs (4) et les bords extérieurs (3) sont soudés alternativement entre eux, et avec au moins un coussinet servant à guider le soufflet à membranes sur une tige et fixée sur la face intérieure du soufflet à membranes,
**caractérisé en ce que**
le coussinet (5) présente sur sa surface de revêtement extérieure (7) une saillie (9) annulaire dépassant radialement vers l'extérieur ou plusieurs saillies (19) distantes les unes des autres dans le sens périphérique, la ou les saillie(s) (9, 19) dépassant dans l'espace entre deux membranes annulaires (2) et bloquant le coussinet par complémentarité de forme pour empêcher tout déplacement dans la direction axiale du soufflet à membranes, et les bords intérieurs (4) des deux membranes annulaires (2), entre lesquelles la ou les saillie(s) (9, 19) du coussinet (5) est ou sont disposée(s), reposent sur la surface de revêtement extérieure (7) du coussinet (5) et, lorsque le soufflet à membranes est à l'état comprimé, les bords intérieurs (4) de membranes annulaires adjacentes (2) sont également disposés sur la surface de revêtement extérieure (7) du coussinet (5).

2. Soufflet à membranes selon la revendication 1,
**caractérisé en ce que**
le coussinet (5) présente sur sa surface de revêtement intérieure (6) au moins un évidement (12), de préférence au moins trois évidements (12) distants les uns des autres dans le sens périphérique, pour former des ouvertures pour le passage de l'air entre le coussinet (5) et la tige (16).

3. Soufflet à membranes selon la revendication 1 ou la revendication 2,
**caractérisé en ce que**
des facettes (13) inclinées par rapport aux surfaces latérales (8) du coussinet sont prévues sur la surface de revêtement extérieure (7) du-coussinet (5) et forment, lors de la compression du soufflet, une entrée biseautée pour des bords intérieurs (4) de membranes annulaires.

4. Soufflet à membranes selon l'une des revendications 1 à 3,
**caractérisé en ce que**
la surface de revêtement extérieure (7) du coussinet (5) a un diamètre légèrement inférieur à l'ouverture intérieure de la membrane annulaire (2), la surface de revêtement extérieure (7) formant une surface de centrage pour la membrane annulaire (2).

5. Soufflet à membranes selon l'une des revendications 1 à 4,
**caractérisé en ce que**
plusieurs coussinets (5) sont disposés à distance les unes des autres dans la direction axiale du soufflet à membranes.

6. Soufflet à membranes selon la revendication 5,
**caractérisé en ce que**
la distance entre les coussinets (5) est à chaque fois comprise entre une fois et trois fois, de préférence entre une fois et demie et deux fois, le diamètre extérieur du soufflet à membranes.

7. Soufflet à membranes selon l'une des revendications 1 à 6,
**caractérisé en ce que**
le coussinet se compose de matière plastique, de préférence de Téflon.

8. Soufflet à membranes selon l'une des revendications 1 à 6,
**caractérisé en ce que**
le coussinet est en métal, de préférence en alliage de bronze.

9. Procédé de fabrication d'un soufflet à membranes déformable élastiquement comprenant une pluralité de membranes annulaires soudées entre elles, au moins un coussinet servant à guider le soufflet à membranes sur une tige et fixé sur la face intérieure du soufflet à membranes,
**caractérisé en ce qu'**
au moins deux, de préférence plusieurs, soufflets partiels (1) sont d'abord fabriqués à partir de membranes annulaires (2) soudées entre elles,
au moins un coussinet (5) est disposé entre deux soufflets partiels (1), un coussinet (5) présentant à chaque fois, sur sa surface de revêtement extérieure (7), une saillie annulaire (9) dépassant radialement vers l'extérieur ou plusieurs saillies (19) distantes les unes des autres dans le sens périphérique, et la ou les saillie(s) (9, 19) dépassant dans l'espace entre les deux membranes annulaires (2) des soufflets partiels (1) adjacentes du côté du bord, et
ensuite, les deux membranes annulaires (2) de ces soufflets partiels (1) adjacentes du côté du bord sont à chaque fois soudées entre elles sur leurs bords extérieurs (3), le coussinet (5) étant bloqué par complémentarité de forme pour empêcher tout déplacement dans là direction axiale du soufflet à membranes.

10. Procédé selon la revendication 9,
**caractérisé en ce qu'**
une coussinet (5) est à chaque fois disposée entre deux soufflets partiels (1).

11. Procédé selon la revendication 9 ou la revendication 10,
**caractérisé en ce que**
la ou les saillie(s) (9, 19) est ou sont disposée(s) dans une zone médiane du coussinet (5), considéré dans la direction axiale, et deux soufflets partiels (1) à souder ensemble sont à chaque fois centrés l'un par rapport à l'autre par la surface de revêtement extérieure (7) du coussinet (5) reliant des deux côtés la saillie ou les saillies.
